# EUROPÄISCHE PATENTANMELDUNG

(11) **EP 0 563 712 A1**
(43) Veröffentlichungstag der Anmeldung: **06.10.1993**
(21) Anmeldenummer: 93104584.3
(22) Anmeldetag: 19.03.1993
(51) Int. Cl.: B25J 15/00

(54) **Greifer für Handhabungseinrichtungen**

(30) Priorität: 28.03.1992 DE 4210218
(71) Anmelder: GEBRÜDER JUNGHANS GMBH, D-78713 Schramberg (DE)
(72) Erfinder: Elbel, Peter, Dipl.-Ing. (FH), W-7230 Schramberg (DE)
(74) Vertreter: Hofmann, Gerhard, Dipl.-Ing. Patentassessor

(57) **Zusammenfassung**

Bei dem Greifer (1) für Handhabungseinrichtungen zur kraft- und/oder formschlüssigen Aufnahme eines Gegenstandes mittels Greiferfinger (9) ist ein von diesen Greiferfingern (9) unabhängiges und räumlich getrenntes Formelement (20,33) für eine Lagefixierung eines aufzunehmenden Gegenstandes eingerichtet.

## Beschreibung

Die Erfindung betrifft einen Greifer für Handhabungseinrichtungen nach dem Oberbegriff von Patentanspruch 1.

Die Aufgabe eines Greifers für Handhabungseinrichtungen besteht im wesentlichen darin, zeitweilig eine kraft/förmschlüssige Anbindung bzw. Aufnahme eines zu handhabenden Gegenstandes an eine Handhabungseinrichtung herzustellen. Zusätzlich ist es im Regelfall erforderlich, eine reproduzierbare Positionierung des zu handhabenden Gegenstandes relativ zur Handhabungseinrichtung sicherzustellen, um dadurch die Lagefixierung von Gegenständen am Greifer herzustellen und aufrechtzuerhalten.

In der Praxis sind sogenannte Standardgreifer bekannt, bei denen die einzelnen Wirkkomponenten in ihrer Dimensionierung und Auslegung auf einzelne Teile oder Teilefamilien, die zu handhaben sind, abgestimmt sind. In Fällen komplexer/flexibler Montageaufgaben besteht die Notwendigkeit, Bauteile und Baugruppen mit voneinander abweichenden Formen und Abmessungen zu handhaben. Zur Erfüllung solcher Montageaufgaben ist die Verwendung möglichst weniger Handhabungseinrichtungen, wie beispielsweise Roboter oder Einlegegeräte, anzustreben.

Um solche Aufgaben zu erfüllen, werden in der Praxis bereits Greiferwechselsysteme eingerichtet, die es ermöglichen, über eine standardisierte Schnittstelle komplexe komplette Standardgreifer auszuwechseln. Darüber hinaus sind auch Revolvergreifsysteme bekannt, bei denen dem jeweiligen Anwendungsfall angepaßte Greifelemente durch Einschwenken in die richtige Position gebracht werden können. Schließlich gibt es Universalgreifer, die besonders große Spannweiten besitzen und ihre Öffnungsweiten durch Verwendung von Sensoren voreinstellen können oder über besonders gestaltete Fingerspitzen verschieden geformte Teile fassen und halten können.

Von Nachteil bei solchen Greifsystem aus dem Stand der Technik ist es, daß eine Anpassung an stark unterschiedliche Teileabmessungen lange und präzise Führungswege für die Greiferbacken erfordert, um die Reproduzierbarkeit der Lagefixierung von zu handhabenden Gegenständen in allen Fällen zu gewährleisten. Dabei erfordern größere Abmessungsunterschiede der Bauteile entsprechend aufwendigere Konstruktionen der Greifsysteme. Für stark unterschiedliche Oberflächenformen von Bauteilen bleibt eine universelle Anpassung schwierig und ist vom Teilespektrum im Einzelfall abhängig.

Die an sich mögliche Einrichtung eines Schnellwechselsystems für Greiferfinger hat den Nachteil, daß eine hohe Präzision und eine hohe Festigkeit das Greifsystem bestimmt und zusätzlich hohe Wechselraten und Wechselzeiten in Kauf genommen werden müssen.

Ausgehend von dem vorstehend genannten Stand der Technik ist es Aufgabe der Erfindung, einen Greifer für Handhabungseinrichtungen der eingangs genannten Art zu schaffen, der einfach im Aufbau ist, eine gute Positioniergenauigkeit der zu handhabenden Gegenstände gewährleistet und auch für unhandliche und schwer zu handhabende Gegenstände einsetzbar ist.

Diese Aufgabe wird erfindungsgemäß durch die Merkmale des Kennzeichenteiles des Patentanspruches 1 gelöst. Ausgestaltungen und Weiterbildungen der Erfindung sind den Unteransprüchen 2 bis 9 zu entnehmen.

Durch diese erfindungsgemäßen Merkmale wird ein Greifer realisiert, der durch eine räumliche Trennung der beiden Funktionen: Lagefixierung des zu handhabenden Gegenstandes und Anbindungsherstellung an die Handhabungseinrichtung bestimmt ist.

Die Lagefixierung für einen zu handhabenden Gegenstand wird durch ein Formelement erzielt, das an die Außen-/Innenkontur der zu greifenden Teile angepaßt ist. Das Formelement kann automatisiert gewechselt werden, um eine Anpassung an andere Teilespektren zu ermöglichen. Es wird mit dem zu greifenden Gegenstand durch Aufsetzen in Berührung gebracht und gewährleistet durch einen formschlüssigen Kontakt die definierte Position und deren Einhaltung.

Das Formelement ist federnd gelagert und geführt, um dadurch eine Zerstörung des Gegenstandes bzw. des Greifers durch Kollision zu verhindern. Die Führung genügt den Positionierungstoleranzen des Gegenstandes relativ zum Greifsystem. Das zu wechselnde Formelement muß keine bewegenden oder getriebenen Teile enthalten, so daß eine rein mechanische Verbindung herzustellen und zu lösen ist. Dazu ist eine selbständige bzw. programmierbare Formanpassung und Formänderung des Formelementes durch Konzeption von Freiformelementen denkbar.

Die notwendige vorwiegend kraftschlüssige Verbindung wird durch einschwenkende Greiferfinger hergestellt, die den Gegenstand in bestimmten Grenzen gegen das Formelement drücken. Für diese Greiferfinger ist ein breiter Spannweg vorgesehen, ohne daß auf die Einhaltung präziser Führungswege großer Wert gelegt werden muß.

Um eine Vorpositionierung der Greiferfinger, z.B. zum Eingreifen in Aussparungen oder zum Eintauchen in Zwischenräume von Gegenständen zu ermöglichen und auch das Innengreifen zu gestatten, ist eine sensorgeführte Positioniermöglichkeit für Zwischenstellungen vorgesehen.

Die Gestaltung der Spitzen der Greiferfinger bzw. der Kontaktpunkte der Greiferfinger soll eine gute Kraftübertragung gewährleisten, was beispielsweise durch Reibzahlen bzw. durch negative Kontaktschrägen am Berührungspunkt bzw. an den Berührungsflächen erzielt wird. Die Größe der Fingerspitzen wird durch die Aussparungsabmessungen bestimmt, in die eventuell eingefahren werden soll.

Soll das Formelement als sogenannter starrer Finger oder als starrer Spannbacken ausgebildet werden, so genügt nur ein bewegter Arm zum Greifen. Dabei können je nach Anzahl der Greiferfinger mehrere Teile gegriffen werden, die gegen das feststehende Formelement gedrückt werden. Im Extremfall kann die kraftschlüssige Verbindung durch Unterdruck im entsprechend gestalteten Formelement hergestellt werden, wodurch das Formelement somit als Sauggreifer dient.

Die besonderen Vorteile der Erfindung liegen einmal im Aufbau des Greifers für eine Handhabungseinrichtung. Die Anpassung des Greifers an die gestaltliche Vielfalt der Gegenstände erfolgt an einem Ort, der nicht mit dem spannenden Bewegungssystem in Verbindung steht. Dies bedeutet einen einfachen Aufbau der Formteile, einen einfachen Aufbau der Wechsel-Schnittstelle, weil keine Energie- oder Mediumübertragung notwendig ist, und nur ein Bewegungssystem für die Spanntätigkeit vorzusehen ist, was ein kostengünstiger Aufbau bei einem breiten Teilespektrum bedeutet.

Da die Positioniergenauigkeit durch das Formelement erbracht wird, sind die Präzisionsanforderungen an die zu bewegenden Elemente gering. Dadurch wird eine kostengünstige Herstellung durch größere Toleranzen, ein geringer Justierungskostenaufwand und auch eine kurvenförmige Bewegung der Arme bei einfachem Aufbau möglich.

Weitere Vorteile der Erfindung liegen in ihrer Anwendung. Die rein mechanische Schnittstelle im Wechselsystem erlaubt eine hohe Wechselgeschwindigkeit und gewährleistet Störunanfälligkeit. Das Greifen eines großen Teilespektrums gestattet einen einfacheren Aufbau der Montagestation und höhere Taktzeiten. Schließlich wird eine sanfte Führung der Teile durch Mehrpunktkontakt und Flächenkontakt erzielt.

Mit dem erfindungsgemäßen Greifer können auch unhandliche und schwer zu handhabende Gegenstände gegriffen werden, für die sonst eigene Spezialgreifer anzufertigen wären. Eine dimensionelle Kontrolle der Greifteile ist mit geringem sensorischen Aufbau realisierbar.

In der Zeichnung ist ein Beispiel der Erfindung dargestellt. Es zeigen:

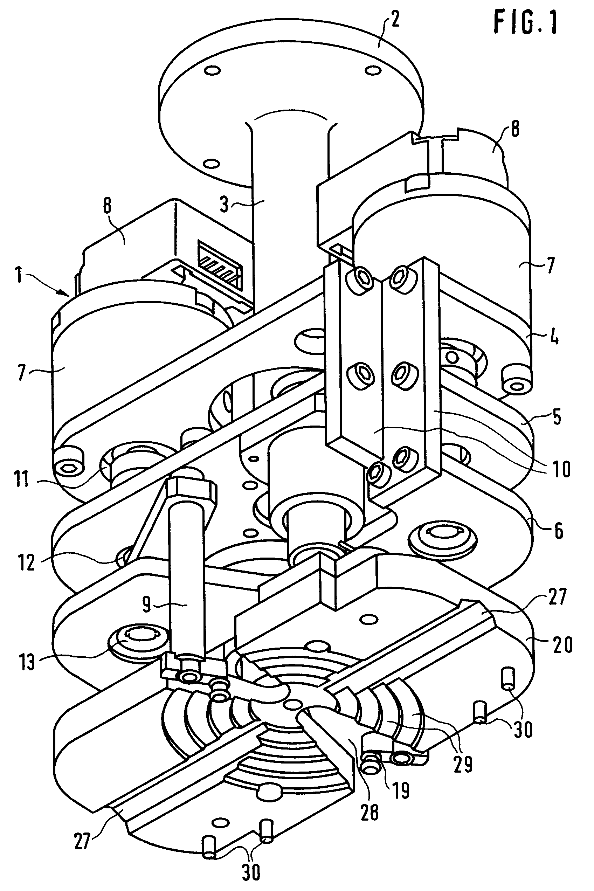

- Figur 1: eine perspektivische Ansicht des neuen Greifers,
- Figur 2: die Greiferfinger des Greifers nach Figur 1 in perspektivischer Ansicht,
- Figur 3: ein Führungssystem für die Aufnahme der Formelemente am Greifer,
- Figur 4: ein Formelement in perspektivischer Ansicht,
- Figur 5: ein Formelement in anderer Bauart in perspektivischer Ansicht.

Der Greifer 1 besteht im wesentlichen aus einer mehrlagigen Plattenkonstruktion, welche die einzelnen Funktionsteile aufnimmt. Die Adaption des Greifers 1 an eine Handhabungseinrichtung oder an einen Roboter (hier nicht gezeigt) erfolgt über einen Anschlußflansch 2.

An einem zentralen Arm 3 des Anschlußflansches 2 ist eine erste, obere Platte 4 befestigt. Auf dieser Platte 4 befinden sich diametral gegenüberliegend elektromotorisch oder durch Druckluft angetriebene Antriebe 7, welche kopfseitig jeweils mit einer Positionssensorik 8 ausgestattet sind, durch welche die Position der Greiferfinger 9 im Schwenkbereich bestimmt und festgehalten wird.

An die obere Platte 4 sind zwei weitere Platten 5 und 6 im jeweils axialen Abstand zueinander angeordnet. Der axiale Abstand und die Verbindung der Platten untereinander wird hergestellt durch Halteleisten 10 am Außenumfang der Platten 4, 5 und 6.

Die Platten 4, 5 und 6 weisen jeweils diametral gegenüberliegende und untereinander fluchtende Öffnungen 11, 12 und 13 unterschiedlichen Durchmessers auf. Durch die Öffnungen 11 in der oberen Platte 4 sind die Antriebswellen 14 mit Kupplungen 15 und Lagern 16 der Antriebe 7 hindurchgeführt. An die Antriebswellen 14 ist ein im wesentlichen rechtwinklig auskragender Schwenkarm 17 angeschlossen, dessen Endbereich die Greiferfinger 9 aufnimmt, welche im wesentlichen parallel zu den Antriebswellen 14 ausgerichtet sind. Die Lager 16 der Antriebswellen 14 sind in die Öffnungen 12 der Platte 5 eingesetzt, während die weiteren Lager 18 unterhalb der Schwenkarme 17 in die Öffnungen 13 der unteren Platte 6 eingepaßt sind. Dieser Aufbau erlaubt ein Ausschwenken der Greiferfinger 9 mit den Schwenkarmen 17 zwischen den beiden Platten 5 und 6. Am Ende der Greiferfinger 9 sind Greifelemente 19 vorgesehen, die an einen aufzunehmenden Gegenstand mit einem einstellbaren Druck angepreßt werden und im Regelfall aus einem Material mit einem hohen Reibwert gebildet sind.

An die mittlere Platte 5 sind ferner Führungssysteme zur Aufnahme von Formelementen 20 angeordnet. Diese beiden sich wiederum diametral gegenüberliegenden Führungssysteme 21 bestehen aus einem oberen Endanschlag 22, einer Führungshülse 23 und einer Lagerbuchse 24. Die Befestigung des Anschlages oberhalb der Führungshülse 23 in der Platte 5 erfolgt über ein Gewinde 25. Am unteren Ende des Führungssystems 21 ist eine Halteplatte 26 angebracht, die der Aufnahme des Formelementes 20 dient. Das Führungssystem ist axial verschieblich ausgebildet, wodurch eine Höhenverschiebbarkeit des Formelementes möglich ist. Das Formelement 20 dient zur Fixierung von aufzunehmenden Gegenständen und ist wechselbar in die Halteplatte 26 eingeklinkt. Die Linearführung wird von zwei linearen Kugellagern übernommen, die auch durch Gleitlager ersetzbar sind. Das Formelement 20 ist an ein spezielles Teilespektrum angepaßt gestaltet. Das Formelement 20 besitzt zu diesem Zweck verschiedene Vertiefungen 27 und Aussparungen 28, wodurch den aufzunehmenden Gegenständen seitlicher Halt im Greifer 1 gegeben wird. Zylindrische Gegenstände von unterschiedlichem Durchmesser können durch treppenförmige Ausfräsungen 29 geführt werden. Lange und schmale Teile werden in den Nuten 27 gehalten. Solche Gegenstände, die in ihren Abmessungen die Größe des Formelementes 20 übersteigen oder in ihren Außenkonturen Merkmale aufweisen, sind durch hervorstehende Stifte 30 arretierbar. Für kleine Gegenstände werden in dem Formelement 20 entsprechende Aussparungen 28 vorgesehen, um das Einschwenken der Greiferfinger bis an diese kleinen Gegenstände zu ermöglichen.

Das Formelement 20 wird durch Paßstifte 36 am Greifer 1 ausgerichtet, die in Zentrierbohrungen 35 des Formelementes 20 eintauchen.

Die Schnappschrauben 31 tauchen in die Bohrungen 32 an der Halteplatte 26 ein. Dort stellen je zwei Federn 37 (Biegefedern) die mechanische Arretierung von Platte 20 an Platte 26 her.

Durch Ausschwenken der Federn 37 wird das Formelement gelöst.

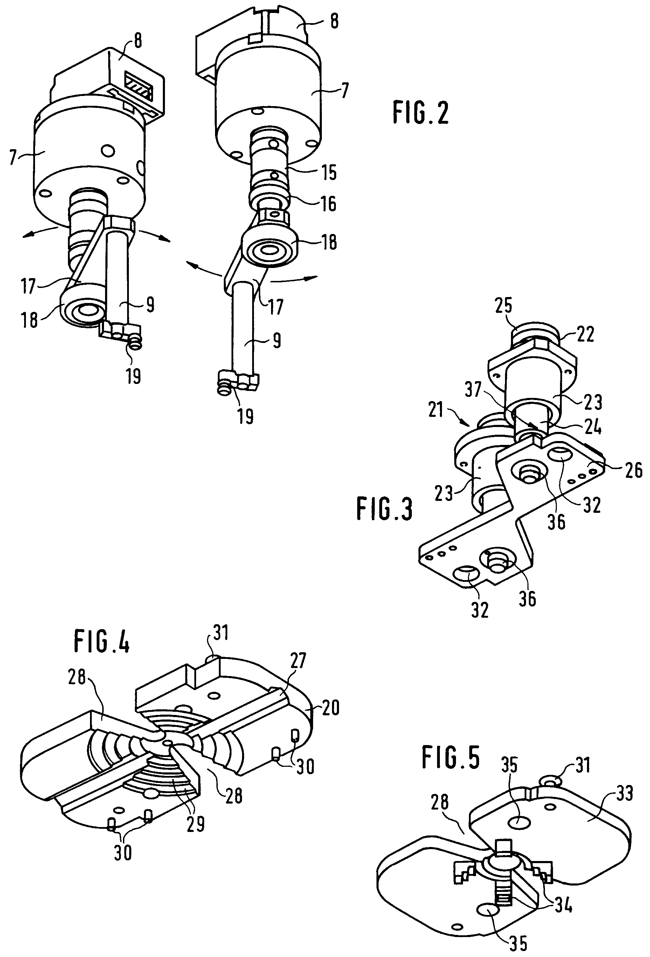

Wie die Figur 5 zeigt, kann das Formelement 20 nach Figur 4 auch die Gestaltung 33 annehmen. Auch dieses Formelement 33 weist seitliche Aussparungen 28 auf. Für die Aufnahme von zylindrischen Gegenständen sind in diesem Fall treppenförmige Stege 34 eingerichtet worden.

Wie die Figuren zeigen, werden die Greiferfinger 9 rotatorisch bewegt. Dabei werden unterschiedliche Greifhöhen durch die Höhenverschiebung des Formelementes 20 bzw. 33 ermöglicht. Das Spannsystem besteht aus den zwei unabhängig steuerbaren Schwenkantrieben 7, deren Antrieb pneumatisch oder elektrisch erfolgt. Die jeweilige Winkelstellung wird von der Positionssensorik 8 aufgenommen, wobei die Steuerung über insgesamt vier 2/3-Wegeventile eine freie Vorpositionierung der Greiferfinger 9 erlaubt. Die starr gelagerten Bewegungselemente sind über Ausgleichskupplungen, wie beispielsweise Faltenbalgkupplungen, Kreuzschieberkupplungen oder Wendel- bzw. Membrankupplungen, mit den pneumatischen Schwenkantrieben verbunden und entlasten dadurch die Wirkelemente. Da die Greiferfinger 9 kleingehalten sind, ist ein Innen- und ein Außengreifen möglich.

## Patentansprüche

1. Greifer für Handhabungseinrichtungen zur kraft- und/oder formschlüssigen Aufnahme und wahlweise einer reproduzierbaren Positionierung eines Gegenstandes mittels Greiferfinger,
dadurch gekennzeichnet,
daß ein von den Greiferfingern (9) unabhängiges und räumlich getrenntes Formelement (20,33) für eine Lagefixierung des aufzunehmenden Gegenstandes vorgesehen ist.

2. Greifer nach Anspruch 1,
dadurch gekennzeichnet,
daß das Formelement (20,33) auswechselbar am Greifer (1) befestigt ist.

3. Greifer nach den Ansprüchen 1 und/oder 2,
dadurch gekennzeichnet,
daß das Formelement (20,33) federnd gelagert ist.

4. Greifer nach Anspruch 1,
dadurch gekennzeichnet,
daß die Greiferfinger (9) mit voreinstellbarer, variabler Kraft an dem lagefixierten Gegenstand anliegen.

5. Greifer nach Anspruch 1 oder 4,
dadurch gekennzeichnet,
daß die Greiferfinger (9) sensorgeführte Zwischenpositionen aufnehmen.

6. Greifer nach den Ansprüchen 1, 4 und 5,
dadurch gekennzeichnet,
daß die Greiferfinger (9) an einem Schwenkantrieb (7) angeschlossen sind, der eine Schwenkbewegung zum und von dem Formelement (20,33) innerhalb eines vorbestimmbaren Schwenkbereiches erlaubt.

7. Greifer nach den Ansprüchen 1 bis 3,
dadurch gekennzeichnet,
daß das Formelement (20,33) höhenverschiebbar am Greifer (1) angeschlossen ist.

8. Greifer nach den Ansprüchen 1 bis 3 und 7,
dadurch gekennzeichnet,
daß das Formelement (20,33) als Scheibe, Platte oder dergleichen ausgebildet ist und eingesetzte und/oder eingeformte Fixierelemente (27,29,30,31,34) aufweist.

9. Greifer nach einem oder mehreren der vorgenannten Ansprüche,
dadurch gekennzeichnet,
daß das Formelement (20,33) unterhalb eines aus mehreren Scheiben, Platten (4,5,6) oder dergleichen gebildeten Greifers (1) wechselbar befestigt ist, die im axialen Abstand übereinander angeordnet sind und sowohl die Antriebe (7) als auch die Greiferfinger (9) lagernd aufnehmen, wobei ein oberer Anschlußflansch (2) für die Verbindung des Greifers (1) mit einer Handhabungseinrichtung vorgesehen ist.
